# EUROPEAN PATENT APPLICATION

(11) **EP 1 688 648 A1**
(43) Date of publication of application: **09.08.2006**
(21) Application number: 04818926.0
(22) Date of filing: 17.11.2004
(51) Int. Cl.: F16J 15/12, C09K 3/10

(54) **SURFACE-COATED SEALING MATERIAL**

(30) Priority: 21.11.2003 JP 2003392172
(71) Applicant: DAIKIN INDUSTRIES, LTD., Osaka-shi, Osaka 530-8323 (JP)
(72) Inventor: TANAKA, Hiroyuki, Yodogawa-seisakusho, Settsu-shi, Osaka 5668585 (JP); NOGUCHI, Tsuyoshi, Yodogawa-seisakusho, Settsu-shi, Osaka 5668585 (JP); HIGASHINO, Katsuhiko, Yodogawa-seisakusho, Settsu-shi,O saka 5668585 (JP)
(74) Representative: HOFFMANN EITLE
(86) International application number: PCT/JP2004/017085
(87) International publication number: WO 2005/050069

(57) **Abstract**

The present invention relates to a surface coated sealing material and provides a sealing material that enhances chemical resistance, plasma resistance, and non-sticking while keeping strength, hardness, and sealing property of a rubber substrate. It is a sealing material that comprises a coating film comprising one kind or more of metal or metallic compound selected from the group of metals, metal oxides, metal nitrides, metal carbides and compounds thereof on the whole or a part of the surface of the substrate which comprises a soft material of Shore D hardness of at most 75 and Shore A hardness of 40 to 100.

## Description

### TECHNICAL FIELD

The present invention relates to a surface coated sealing material, in which chemical resistance, plasma resistance, and non-sticking are enhanced while keeping strength, hardness, and sealing property that a soft substrate has.

### BACKGROUND ART

Soft materials are generally used as sealing materials in the fields of such as the automobile industry, the semiconductor industry, and the chemical industry. However, because these sealing materials are used in closely contact with various types of apparatuses, there are such problems that sealing materials are firmly fixed to the apparatus on which the sealing material is applied due to using for a long period of time, which makes it difficult to take off the sealing material, has adverse effects on the operation of the apparatus in dynamic parts and the like. In order to prevent such firm fixing of the sealing material, it is required to give non-sticking on the surface of the sealing material. Although the process of giving non-sticking include a process of adding fillers such as a solid lubricant, the effect of the process cannot be obtained unless a skin layer of a molded product is removed, thus, the uses are limited, and the process gives large influence on the strength, hardness and sealing property of soft materials.

In the process of manufacturing semiconductors, sealing materials are used for sealing in various connecting parts and movable parts in CVD apparatuses used in the step for forming an insulating film and a metal thin film for wiring. These sealing materials are required not only to have sealing property and non-sticking property but also to withstand the conditions for a treatments with plasma having a high density (10¹² to 10¹³/cm³) due to the miniaturization in the process and the enlargement of a substrate wafer, and not to contaminate a semiconductor, in which extremely precise processing is required. As sealing materials which can handle such demands, crosslinkable fluorine-containing elastomers and silicone elastomers are mainly employed. Further, as a process for imparting plasma resistance to these elastomers, the process for filling a filler having the effect of shielding plasma in the elastomer is generally known (for example, see WO 03/051999 pamphlet).

However, even in the elastomeric materials filled with these fillers, the elastomers are slowly deteriorated by being exposed with plasma and the fillers imparting plasma resistance which is filled are left out. Leaving out the filler cause generation of particles, besides that plasma resistance of the elastomeric materials is lowered, therefore the process is not sufficient in view of the long term. A sealing material prepared by forming diamond-like carbon on at least a part of the surface of the substrate comprising a composition containing a crosslinkable fluorine-containing elastomer for the purpose of improving (oxygen) plasma resistance and sticking property (for example, see JP-A-2003-165970) is also disclosed, and further, a sealing material prepared by forming diamond-like carbon on the surface of a rubber substrate for the purpose of improving the adherence and giving slipping character (for example, see JP-A-2002-47479, JP-A-2002-47480, and JP-A-2002-48240). However, in these processes, plasma resistance, particularly resistance to oxygen plasma is low.

Consequently, no sealing material having non-tacking property on the surface, as well as chemical resistance and plasma resistance, while keeping strength, hardness, and sealing property that a rubber substrate has is yet known.

The present invention relates to a surface coated sealing material, and provides the sealing material in which non-tacking property, chemical resistance and plasma resistance are enhanced while keeping strength, hardness, and sealing property that a soft substrate has.

### DISCLOSURE OF INVENTION

Namely, the present invention relates to a sealing material comprising a coating film comprising at least one kind of a metal or a metallic compound selected from the group consisting of metals, metal oxides, metal nitrides, metal carbides and complex thereof on the whole or a part of the surface of a substrate comprising a soft material having Shore D hardness of at most 75 and Shore A hardness of 40 to 100.

The soft material is preferably an elastomer.

The soft material is preferably a fluorine polymer material.

The soft material is preferably a fluorine rubber.

The thickness of the coating film is preferably 0.005 to 1 µm.

The soft material and the coating film are preferably adhered closely contact with each other at the degree of adhesion having the number of peeling between the soft material and the coating film of at most 50/100, which is measured by the cross-cut tape adhesion test (1 mm square/100 pieces) according to JIS K5600.

The soft material and the coating film are preferably adhered closely with each other at the degree of adhesion wherein the critical breaking load is at least 25 mN, which is measured with the microscratch test under the following conditions;

### Note:

| Test conditions: | |
|---|---|
| Curvature radius of diamond stylus | 5.0 µm |
| Elastic arm | 146.64 g/mm |
| Stage angle | 3.0° |
| Measurement speed | 10.0 µm/s |
| Load applying speed | 75.31 mN/mm |
| Excitation width | 79 µm |
| Excitation frequency | 30 Hz |

All the rates of decrease in weight are preferably at most 1 % by weight at irradiating respective plasmas of O₂, CF₄, and NF₃ under the following conditions;

### Note:

**Samples: A sheet having a thickness of 2 mm, a size of 10 mm × 35 mm**

| Irradiation conditions: | | |
|---|---|---|
| O₂ plasma and CF₄ plasma | Gas flow rate | 16 SCCM |
| | Pressure | 20 mTorr |
| | Output power | 800 W |
| | irradiation time | 30 minutes |
| NF₃ plasma | NF₃/Ar | 1 SLM/ 1 SLM |
| | Pressure | 3 Torr |
| | irradiation time | 2 hours |
| | Temperature | 150°C |

The coating film is preferably formed by a vacuum film forming process.

The vacuum film forming process is preferably an ion plating process.

The sealing material is preferably used for equipment for manufacturing a liquid crystal or a semiconductor.

Moreover, the present invention relates to equipment for manufacturing a liquid crystal or a semiconductor having the sealing material.

In addition, the present invention relates to the process for preparing a sealing material, comprising a step of coating the whole or a part of the surface of a substrate comprising a soft material having Shore D hardness of at most 75 and Shore A hardness of 40 to 100 with at least one kind of a metal or a metallic compound selected from the group consisting of metals, metal oxides, metal nitrides, metal carbides and complexes thereof by the ion plating process.

### BEST MODE FOR CARRYING OUT THE INVENTION

The present invention relates to a sealing material which has a coating film comprising at least one kind of a metal or a metallic compound selected from the group consisting of metals, metal oxides, metal nitrides, metal carbides and complex thereof, on the whole or a part of the surface of a substrate comprising a soft material having Shore D hardness of at most 75 and Shore A hardness of 40 to 100.

The soft material used in the present invention has Shore D hardness of at most 75 and Shore A hardness of 40 to 100. Shore D hardness is preferably at most 65 and Shore A hardness is preferably 50 to 100. When Shore D hardness is more than 75, it is difficult to be regarded as a soft material and too hard to be suitable for a sealing material. When Shore A hardness is less than 40, the material is too soft and it tends that proper sealing force is hardly obtained. Although soft materials having Shore D hardness of at most 75 and Shore A hardness of 40 to 100 are not particularly limited, as the soft materials, examples are fluorine polymer materials such as fluorine resins and fluorine rubbers, fluorosilicon rubber, silicon rubber, NBR, and EPDM. Among them, fluorine polymer materials are preferable, and fluorine rubbers are more preferable.

Fluorine rubbers are not particularly limited as long as they are conventionally used for sealing materials, especially sealing materials for a semiconductor manufacturing equipment, examples are fluorine rubber (a), thermoplastic fluorine rubber (b), and rubber compositions comprising these fluorine rubbers.

As the fluorine rubber (a), examples are non-perfluoro fluorine rubber (a-1) and perfluoro fluorine rubber (a-2).

As the thermoplastic fluorine rubbers, examples are fluorine-containing multi-segmented polymer (b-1) comprising elastomeric fluorine-containing polymer chain segment and non-elastomeric fluorine-containing polymer chain segment, in which at least 90 % by mol of the structural units of both the elastomeric fluorine-containing polymer chain segment and the non-elastomeric fluorine-containing polymer chain segment are perhalo olefin, fluorine-containing multi-segmented polymer (b-2) comprising elastomeric fluorine-containing polymer chain segment and non-elastomeric fluorine-containing polymer chain segment, in which at least 90 % by mol of the structural units of the elastomeric fluorine-containing polymer chain segment are perhalo olefin and the non-elastomeric fluorine-containing polymer chain segment contains less than 90 % by mol of perhalo olefin as structural units and fluorine-containing multi-segmented polymer (b-3) comprising elastomeric fluorine-containing polymer chain segment and non-elastomeric fluorine-containing polymer chain segment, in which the elastomeric fluorine-containing polymer chain segment contain less than 90 % by mol of perhalo olefin as structural unit and non-elastomeric fluorine-containing polymer chain segment contain more than 90 % by mol of perhalo olefin and less than 90 % by mol of perhalo olefin as a structural unit.

As non-perfluoro fluorine rubber (a-1), examples are vinylidene fluoride (VdF) fluorine rubber, tetrafluoroethylene (TFE)/propylene fluorine rubber, tetrafluoroethylene (TFE)/propylene/vinylidene fluoride (VdF) fluorine rubber, ethylene/hexafluoropropylene (HFP) fluorine rubber, ethylene/hexafluoropropylene (HFP)/vinylidene fluoride (VdF) fluorine rubber, ethylene/ hexafluoropropylene (HFP)/tetrafluoroethylene (TFE) fluorine rubber, fluorosilicone fluorine rubber and fluorophosphazene fluorine rubber. These can be used alone respectively, or in random combinations as long as the effect of the present invention is not be impaired.

Vinylidene fluoride fluorine rubber is referred to a fluorine-containing elastomeric copolymer comprising 45 to 85 % by mol of vinylidene fluoride and 55 to 15 % by mol of at least one other monomer copolymerizable with vinylidene fluoride. It is preferably referred to fluorine-containing copolymer comprising 50 to 80 % by mol of vinylidene fluoride and 50 to 20 % by mol of at least one monomer copolymerizable with vinylidene fluoride.

As for at least one other monomer copolymerizable with vinylidene fluoride, examples are fluorine-containing monomers such as tetrafluoroethylene (TFE), chlorotrifluoroethylene (CTFE), trifluoroethylene, hexafluoropropylene (HFP), trifluoropropylene, tetrafluoropropylene, pentafluoropropylene, trifluorobutene, tetrafluoroisobutene, perfluoro(alkylvinylether) (PAVE), and vinyl fluoride, and nonfluorine-containing monomers such as ethylene, propylene, and alkylvinyl ether. These can be used alone respectively, or in random combinations. Among them, tetrafluoroethylene, hexafluoropropylene, and perfluoro (alkylvinyl ether) are preferable.

Specific examples of rubber are VdF-HFP rubber, VdF-HFP-TFE rubber, VdF-CTFE rubber, and VdF-CTFE-TFE rubber.

A tetrafluoroethylene/propylene fluorine rubber is referred to a fluorine-containing copolymer, comprising 45 to 70 % by mol of tetrafluoroethylene, 55 to 30 % by mol of propylene, and further 0 to 5 % by mol of a monomer gives a crosslinking site based on the total amount of tetrafluoroethylene and propylene.

As the monomer to give a crosslinking site, examples are iodine-containing monomers such as perfluoro(6,6-dihydro-6-iodo-3-oxa-1-hexene) and perfluoro(5-iodo-3-oxa-1-pentene) described in JP-B-5-63482 and JP-A-7-316234, bromine-containing monomers described in JP-A-4-505341, cyano group-containing monomers, carboxyl group-containing monomers and alkoxycarbonyl group-containing monomers described in JP-A-4-505345 and JP-A-5-500070.

These non-perfluorofluorine rubber (a-1) can be prepared by usual processes.

As perfluorofluorine rubber (a-2), example is a rubber comprising tetrafluoroethylene/ perfluoro(alkylvinyl ether)/a monomer to give a crosslinking site. The composition of tetrafluoroethylene/perfluoro(alkylvinyl ether) is preferably 50 to 90 / 10 to 50 % by mol, more preferably 50 to 80 / 20 to 50 % by mol, and further preferably 55 to 70 / 30 to 45 % by mol. The monomer to give a crosslinking site is preferably 0 to 5 % by mol and more preferably 0 to 2 % by mol based on the total amount of tetrafluoroethylene and perfluoro(alkylvinyl ether).

As perfluoro(alkylvinyl ether) in this case, examples are perfluoro(methylvinyl ether) and perfluoro(propylvinyl ether), these can be used alone, or in random combinations.

As the monomers to give a crosslinking site, exapmles are iodine or bromine-containing monomers represented by the general formula (1);

CX¹₂ = CX¹-R_{f}¹CHR¹X² (1)

(wherein X¹ is hydrogen atom, fluorine atom or -CH₃, R_{f}¹ is a fluoroalkylene group, a perfluoroalkylene group, a fluoropolyoxyalkylene group or a perfluoropolyoxyalkylene group, R¹ is a hydrogen atom or -CH₃, and X² is an iodine atom or a bromine atom); and monomers represented by the general formula (2);

CF₂ = CFO (CF₂CF(CF₃)O)ₘ(CF2)ₙ-X³ (2)

(wherein m is an integer of 0 to 5, n is an integer of 1 to 3, X³ is cyano group, carboxyl group, alkoxycarbonyl group or bromine atom), these can be used alone, or in random combinations.

The iodine atom, cyano group, carboxyl group, alkoxycarbonyl group, and bromine atom can function as a crosslinking point.

Perfluorofluorine rubber (a-2) can be prepared by usual processes.

Specific examples of the perfluorofluorine rubber (a-2) are fluorine rubber described in WO 97/24381 pamphlet, JP-B-61-57324, JP-B-4-81608, JP-B-5-13961.

Next, fluorine-containing multi-segmented polymer (b-1), which is thermoplastic fluorine rubber (b) is described below.

An elastomeric fluorine-containing polymer chain segment is explained first. The elastomeric fluorine-containing polymer chain segment gives flexibility to the polymer and has a glass transition point of at most 25°C, and preferably at most 0°C. As perhalo olefins that constitute at least 90 % by mol of the structural unit thereof, examples are tetrafluoroethylene, chlorotrifluoroethylene, hexafluoropropylene, and perfluorovinyl ethers represented by the general formula (3):

CF₂ = CFO (CF₂CFYO)ₚ-(CF₂CF₂CF₂O)_{q}-R_{f}² (3)

(wherein Y is F or CF₃, R_{f}² is a perfluoroalkyl group having 1 to 5 carbon atoms, P is an integer of 0 to 5, and q is an integer of 0 to 5).

Examples may be fluorine-containing monomers such as vinylidene fluoride, trifluoroethylene, trifluoropropylene, tetrafluoropropylene, pentafluoropropylene, trifluorobutene, tetrafluoroisobutene and vinyl fluoride, and nonfluorine-containing monomers such as ethylene, propylene and alkylvinyl ethers as structural units other than perhalo olefins composing the elastomeric fluorine-containing polymer chain segment.

Example is elastomeric polymer chain comprising tetrafluoroethylene/perfluoro (alkylvinyl ether) / monomer to give a crosslinking site as the preferable examples of the elastomeric fluorine-containing polymer chain segment. The composition of tetrafluoroethylene/perfluoro(alkylvinyl ether) is 50 to 85 / 50 to 15 % by mol, and the monomer to give a crosslinking site is preferably 0 to 5 % by mol based on the total amount of tetrafluoroethylene and perfluoro (alkylvinyl ether).

Examples are monomers represented by the general formulas (1) and (2) as the monomers to give a crosslinking site.

Next, a non-elastomeric fluorine-containing polymer chain segment is described below. As perhalo olefins that constitute at least 90 % by mol of the structural unit of the non-elastomeric fluorine-containing polymer chain segment, examples are perhalo olefins such as tetrafluoroethylene, chlorotrifluoroethylene, perfluoro (alkyl vinyl ether), hexafluoropropylene, a compound represented by the general formula (4):

CF₂ = CF (CF₂) ᵣX⁴ (4)

(wherein r is an integer of 1 to 10, X⁴ is a fluorine atom or a chlorine atom), and perfluoro-2-butene.

As a structural unit, other than perhalo olefins that constitute the non-elastomeric fluorine-containing polymer chain segment, examples are the same structural units as those other than perhalo olefins that constitute the elastomeric fluorine-containing polymer chain segment.

As the preferable examples of the non-elastomeric fluorine-containing polymer chain segment, example is a non-elastomeric polymer chains comprising 85 to 100 % by mol of tetrafluoroethylene and 0 to 15 % by mol of a compound represented by the general formula (5):

CF₂ = CF-R_{f}³ (5)

(wherein R_{f}³ is R_{f}⁴ or -OR_{f}⁴, R_{f}⁴ is a perfluoroalkyl group having 1 to 5 carbon atoms).

Next, the fluorine-containing multi-segmented polymer (b-2) is described below.

The elastomeric fluorine-containing polymer chain segment in this case is sufficient to be the same as that given for the fluorine-containing multi-segmented polymer (b-1).

As a structural unit of non-elastomeric fluorine-containing polymer chain segment, examples are vinylidene fluoride, vinyl fluoride, trifluoroethylene, compounds represented by the general formula (6):

CH₂ = CX⁵-(CF₂)ₛ-X⁵ (6)

(wherein X⁵ is a hydrogen atom or a fluorine atom, and s is an integer of 1 to 10), and partially-fluorinated olefins such as CH₂ = C(CF₃)₂.

Monomers that are copolymerizable with these monomers such as ethylene, propylene, vinyl chloride, vinyl ether, vinyl carboxylate, and acrylic acid can be used as a copolymerization component.

Next, a fluorine-containing multi-segmented polymer (b-3) is described below.

The elastomeric fluorine-containing polymer chain segment of fluorine-containing multi-segmented polymer (b-3) is a polymer chain having a glass transition point of at most 25°C, and preferably of at most 0°C.

The elastomeric fluorine-containing polymer chain segment contains less than 90 % by mol of perhalo olefins as a structural unit. As a structural unit other than the perhalo olefins in this case, example is the same structural units as those other than the perhalo olefins that given for the fluorine-containing multi-segmented polymer (b-1).

The non-elastomeric fluorine-containing polymer chain segment of the fluorine-containing multi-segmented polymer (b-3) may be the same as the non-elastomeric fluorine-containing polymer chain segment in the above described fluorine-containing multi-segmented polymers of (b-1) and (b-2).

It is important that thermoplastic fluorine rubber (b) is a fluorine-containing multi-segmented polymer, in which elastomeric fluorine-containing polymer chain segment and non-elastomeric fluorine-containing polymer chain segment are bonded by blocking or grafting in each molecule.

Herein, as process for preparing the thermoplastic fluorine rubber (b), various known processes can be employed, among them, a process for preparing a block-type fluorine-containing multi-segmented polymer described in JP-B-58-4728 and a process of preparing a graft-type fluorine-containing multi-segmented polymers described in JP-A-62-34324 can be preferably employed.

Particularly, in a viewpoint that homogenous and regular segmented polymers having a high segmentation ratio (blocking ratio) can be obtained, a block-type fluorine-containing multi-segmented polymer, which is synthesized by so-called the iodine transfer polymerization method described in JP-B-58-4728 and KOBUNSHI RONBUNSHU Japanese Journal of Polymer Science and Technology (Vol. 49, No. 10, 1992) are preferable.

Elastomeric fluorine-containing polymer chain segment can be prepared by iodine transfer polymerization known as a process for preparing fluorine rubber. An example is a process of emulsion polymerization of the perhalo olefin and, when necessary, a monomer which gives a curing site is carried out in the presence of a radical initiator while stirring under pressure in an aqueous medium under substantially oxygen-free atmosphere and in the presence of an iodine compound, preferably a diiodine compound. Typical examples of diiodine compounds used are, for example, 1,3-diiodoperfluoropropane, 1,4-diiodoperfluorobutane, 1,3-diiodo-2-chloroperfluoropropane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, and 1,2-diiodoethane. These compounds may be used alone or may be used in combination each other. Among them, 1,4-diiodoperfluorobutane is preferable. The amount of diiodo compound to be added is preferably 0.01 to 1 % by weight based on the total amount of the elastomeric fluorine-containing polymer chain segment.

The terminal part of an elastomeric fluorine-containing polymer chain segment thus obtained is a perhalo type and has an iodine atom which is an initiation point for block copolymerization of the non-elastomeric fluorine-containing polymer chain segment.

The radical initiators to be used for preparing the elastomeric fluorine-containing polymer chain segment in the present invention are sufficient to be those which are conventionally used for the polymerization of fluorine elastomer. Examples of these initiators are organic and inorganic peroxides, and azo compounds. As a typical initiator, examples are persulfates, carbonate peroxides, and ester peroxides, and as a preferable initiator, an example is ammonium persulfate (APS). APS may be used alone, or used in combination with a reducing agents such as sulphites and sulfite salts.

The number average molecular weight of an elastomeric fluorine-containing polymer chain segment thus obtained is preferably 5,000 to 750,000 and more preferably 20,000 to 400,000 in view of imparting flexibility, elasticity, mechanical properties to the entire fluorine-containing multi-segmented polymer obtained.

Block copolymerization of non-elastomeric fluorine-containing polymer chain segment to elastomeric fluorine-containing polymer chain segment can be carried out by changing a monomer to those for non-elastomeric fluorine-containing polymer chain segment in succession to the emulsion polymerization of elastomeric fluorine-containing polymer chain segment.

The number average molecular weight of the obtained non-elastomeric segment is preferably 1,000 to 1,200,000 and, more preferably 3,000 to 600,000.

The thermoplastic fluorine rubber (b) obtained in this way is composed mainly of polymer molecules in which non-elastomeric fluorine-containing polymer chain segments are bonded to both sides of the elastomeric fluorine-containing polymer chain segment and polymer molecules in which a non-elastomeric fluorine-containing polymer chain segment is bonded to one side of the elastomeric fluorine-containing polymer chain segment.

Also, in a viewpoint of the thermal resistance of the obtained thermoplastic fluorine rubber (b) (a fluorine-containing multi-segmented polymer), a crystalline melting point of non-elastomeric fluorine-containing polymer chain segment is preferably at least 150°C and more preferably 200 to 360°C.

In the present invention, a composition comprising fluorine rubber (a) and thermoplastic fluorine rubber (b) as mentioned above can be used.

A crosslinking agent used in the present invention may be suitably selected depending on a crosslinking method which is employed. As a crosslinking method, any of polyamine crosslinking, polyol crosslinking, peroxide crosslinking and imidazole crosslinking can be employed. Triazine crosslinking, oxazole crosslinking and thiazole crosslinking and the like can be also employed.

As a crosslinking agent, examples in the polyol crosslinking are polyhydroxy compounds such as bisphenol AF, hydroquinone, bisphenol A, diaminobisphenol AF, examples in peroxide crosslinking are organic peroxides such as α,α'-bis(t-butylperoxy)diisopropylbenzene, 2,5-dimethyl-2,5-di (t-butylperoxy) hexane, and dicumyl peroxide, and examples in polyamine crosslinking are polyamine compounds such as hexamethylenediamine carbamate, and N, N'-dicinnamylidene-1,6-hexamethylenediamine.

As a crosslinking agent used in triazine crosslinking, examples are organic tin compounds such as tetraphenyl tin and triphenyl tin.

The crosslinking agents used in oxazole crosslinking, imidazole crosslinking and thiazole crosslinking, examples are a bisdiaminophenyl crosslinking agent, a bisaminophenol crosslinking agent and a bisaminothiophenol crosslinking agent represented by the general formula (7): 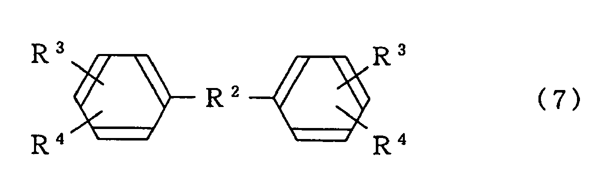 (wherein R² is -SO₂-, -O-, -CO-, an alkylene group having 1 to 6 carbon atoms, a perfluoroalkylene group having 1 to 10 carbon atoms, or a single bond, as for R³ and R⁴, one of them is -NH₂ and the other is -NHR⁵, -NH₂, -OH, or -SH, R⁵ is a hydrogen atom, a fluorine atom, or a monovalent organic group, and preferably, R³ is -NH₂ and R⁴ is -NHR⁵), a bisamidorazone crosslinking agent represented by the general formula (8): 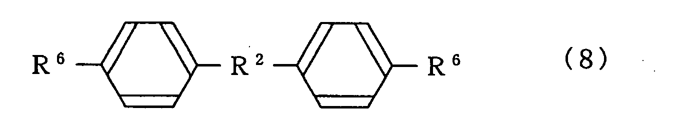 (wherein R² is the same as described above, and R⁶ is 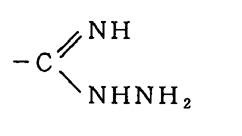 or 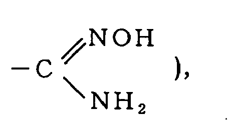 and a bisamidoxime cross-linking agent represented by the general formulas (9) or (10): 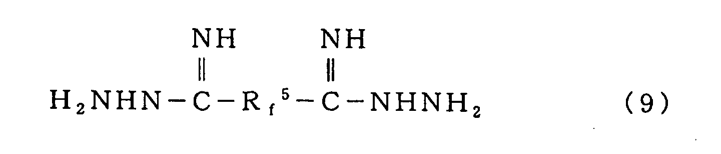 (wherein R_{f}⁵ is a perfluoroalkylene group having 1 to 10 carbon atoms); 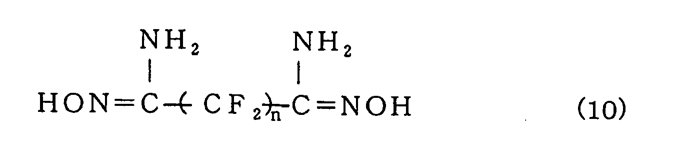 (wherein n is an integer of 1 to 10). These bisaminophenol crosslinking agents, bisaminothiophenol crosslinking agents, and bisdiaminophenyl crosslinking agents react with a cyano group, a carboxyl group and an alkoxycarbonyl group to form an oxazole ring, a thiazole ring and an imidazole ring and give a crosslinked article.

As particularly preferable crosslinking agents, examples are compounds having several of 3-amino-4-hydroxyphenyl groups, a compound having several 3-amino-4-mercaptophenyl groups, and a compound represented by the general formula (11): 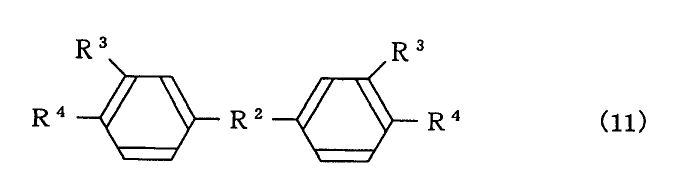 (wherein R², R³, and R⁴ are the same as described above). Specifically, examples are such as 2,2-bis(3-amino-4-hydroxyphenyl) hexafluoropropane (generic name: bis(aminophenol)AF), 2,2-bis(3-amino-4-mercaptophenyl)hexafluoropropane, tetraaminobenzene, bis(3,4-diaminophenyl)methane, bis(3,4-diaminophenyl) ether, 2,2-bis(3,4-diaminophenyl)hexafluoropropane, 2,2-bis[3-amino-4-(N-phenylamino)phenylhexafluoropropane, 2,2-bis[3-amino-4-(N-methylamino)phenyl]hexafluoropropane, 2,2-bis[3-amino-4-(N-ethylamino)phenyl]hexafluoropropane, 2,2-bis[3-amino-4-(N-propylamino)phenyl]hexafluoropropane, 2,2-bis[3-amino-4-(N-perfluorophenylamino)phenyl]hexafluoropropane, and 2,2-bis[3-amino-4-(N-benzylamino)phenyl]hexafluoropropane.

The amount of the crosslinking agent to be added is preferably 0.01 to 10 parts by weight, and more preferably 0.1 to 5 parts by weight based on 100 parts by weight of an elastomer. When the crosslinking agent is less than 0.01 parts by weight, a degree of crosslinking is insufficient, thus the performance of a fluorine-containing molded article tends to be damaged. When the crosslinking agent is more than 10 parts by weight, the crosslinking density becomes too high, thus a cross linking time tends to take long, besides being economically unfavorable.

As a crosslinking aid in the polyol crosslinking, organic bases generally used for crosslinking an elastomer such as various quaternary ammonium salts, quaternary phosphonium salts, cyclic amines, and monofunctional amine compounds can be used. Specific examples are quaternary ammonium salts such as tetrabutylammonium bromide, tetrabutylammonium chloride, benzyltributylammonium chloride, benzyltriethylammonium chloride, tetrabutylammonium hydrogensulfate and tetrabutylammonium hydroxide; quaternary phosphonium salts such as benzyltriphenylphosphonium chloride, tributylallylphosphonium chloride, tributyl-2-methoxypropylphosphonium chloride and benzylphenyl (dimethylamino)phosphonium chloride; monofunctional amines such as benzylmethylamine and benzylethanolamine; and cyclic amines such as 1,8-diazabicyclo[5.4.0]-undec-7-ene.

As cross-linking aid for the peroxide crosslinking, examples are triallyl cyanurate, triallyl isocyanurate (TAIC), tris(diallylamine-s-triazine), triallyl phosphite, N,N-diallyl acrylamide, hexaallyl phospholamide, N,N,N',N'-tetraallyl tetraphtalamide, N,N,N',N'-tetraallyl malonamide, trivinyl isocyanurate, 2,4,6-trivinylmethyl trisiloxane, and tri(5-norbornene-2-methylene)cyanurate. Among them, triallyl isocyanurate (TAIC) is preferable from the viewpoints of its crosslinking property and physical properties of crosslinked compounds.

The amount of a crosslinking aid to be added is 0.01 to 10 parts by weight based on 100 parts by weight of an elastomer and preferably 0.1 to 5 parts by weight. When the crosslinking aid is less than 0.01 parts by weight, a crosslinking time tends to be too long to endure the practical use, and when it is more than 10 parts by weight, besides the crosslinking time tends to be too fast, the permanent compression strain of a molded article tends to lower.

Further, in viewpoints of strength, hardness, and sealing property, fillers such as inorganic fillers, for example, carbon black and metal oxides and organic fillers, for example, powder of engenieering resins are preferably added. Specifically, examples of metal oxides are aluminum oxide and magnesium oxide, examples of organic fillers are imide fillers having the imide structure such as polyimide, polyamide imide and polyether imide; polyallylate, polysulfone, polyether sulfone, polyphenylene sulfide, polyether ether ketone, and polyoxybenzoate. Among these fillers, aluminum oxide and polyimide are preferably added in viewpoints of heat resistance and plasma resistance.

The amount of these fillers to be added is preferably 1 to 50 parts by weight based on 100 parts by weight of a crosslinkable elastomer, and more preferably 5 to 20 parts by weight. When the amount of the filler to be added is less than 1 part by weight, the effect as filler does not tend to be expected, and when it is more than 50 parts by weight, the filler does not tend to be suitable as sealing material due to having extremely high hardness.

Also, processing aids, pigments, and metallic hydroxide such as calcium hydroxide may be used unless they do not impair the object of the present invention.

The sealing material of the present invention can be obtained by coating the whole or a part of a substrate comprising a soft material having the shore D hardness of at least 75 and the shore A hardness of 40 to 100 with at least one metal or metallic compound selected from the group consisting of metals, metal oxides, metal nitrides, metal carbides and complex thereof.

Examples of the metal are aluminum, silicon, titanium, and yttrium, and respectively oxides, nitrides, and carbides thereof. Among these, aluminum and alumina are preferable in viewpoints of material cost, easiness of handling, and plasma resistance.

The thickness of the coating film comprising a metal or a metallic compound is preferably 0.005 to 1 µm, and more preferably 0.005 to 0.5 µm. When the thickness of the coating film is less than 0.005 µm, the properties such as non-sticking and plasma resistance tends to be insufficient, and when it is more than 1 µm, the film cannot follow the deformation of the sealing material, therefore it tends to occur cracks which deteriorates the plasma resistance on the surface.

As a process for forming a coating film comprising a metal or a metallic compound, a vacuum film forming process is used. Examples of the vacuum film forming process are an ion plating process, a sputtering process, a CVD process, and a vacuum evaporation process. Among these processes, in viewpoints of cohesiveness of a coating film, capability of processing at a low temperature, availability of evaporation materials for coating, and capability of using nitrides and carbides, the ion plating process is preferable, and particularly the ion plating process of using a holocathode plasma gun is more preferable.

The conditions for film forming by the ion plating process may suitably set according to a kind of soft material, a kind of film and a film thickness used. A film forming rate is preferable to be 0.1 to 5 nm/second, and more preferable to be 0.3 to 2 nm/second. When the film forming rate is less than 0.1 nm/second, taking much time is apt to be required to obtain the objective film thickness, and when being over 5 nm/ second, coated surface becomes rough easily and controlling the film thickness is apt to be difficult.

Surface treatment on the surface of the base material is also preferable with such as a plasma ashing to improve the adhesion of the coated layer before coating.

Further, the coated film comprising a metal or a metallic compound can be multiple layers. An example is a coating layer comprising two layers of aluminum as the first layer and gold as the second layer. According to making multiple layers like this, coating with a metal or a metallic compound which has been difficult to directly adhere to a soft base material is possible and the amount of very expensive coating materials can be minimized.

The soft material and the coating film comprising a metal or a metallic compound in the sealing material of the present invention are preferably closely adhered with each other at the degree of adhesion having the number of peeling between the soft material and the coating film of at most 50/100, which is measured with the cross-cut tape test (1 mm square/100 pieces) of JIS K 5600, and are more preferable to be at the degree of at most 5/100. When the number of peeling is over 50/100, the coating film is apt to peel off even by slight degree of friction. Also, a test piece used in the cross-cut tape test is a sheet (thickness of 2 mm and size of 15 mm × 15 mm) comprising a soft material used for a seal material and a coating film, which is applied with a coating film having a desired thickness.

The soft material and the coating film comprising a metal or a metallic compound for the sealing material of the present invention are preferably closely adhered with each other at the degree of adhesion having the critical breaking load of at least 25 mN, which is measured by the microscratch test at the following conditions, and more preferable to be at the degree of at least 30 mN and further preferable to be at the degree of at least 40 mN. When the critical breaking load is less than 25 mN, the coating film tends to peel off due to the slight degree of friction or deformation of the base material.

### Note:

**Test device: Ultra-fine film scratch tester MODEL CSR-02 (made by Rhesca Co., Ltd.)**

| Test conditions: | |
|---|---|
| Curvature radius of diamond stylus | 5.0 µm |
| Elastic arm | 146.64 g/mm |
| Stage angle | 3.0° |
| Measurement speed | 10.0 µm/s |
| Load applying speed | 75.31 mN/mm |
| Excitation width | 79 µm |
| Excitation frequency | 30 Hz |

Herein, the microscratch test is a testing procedure for evaluating the adhesiveness of a flat thin film of a metal, a metal oxide or a metal nitride formed on a base material having a thickness of at most 1 µm. The peeling of the film is detected from such as the change in the coefficient of friction, and the load added to a stylus at that time is regarded as a critical breaking load. It is found that the larger the numerical value is, the higher the adhesion is.

In the microscratch test, the adhesion between the soft material and the coating film can be measured. When the coating film is at most 1 µm, the adhesion can be evaluated without being affected by the hardness of rubber. The measurement in a minute area is possible, therefore it is not necessary to prepare test piece for measurement, and the sealing material of the present invention can be directly used for the measurement.

All the weight reduction rates of the sealing material of the present invention are preferable to be at most 1 % by weight and more preferable to be at most 0.1 % by weight at irradiating respective plasma of O₂, CF₄, and NF₃ under the following conditions. When the weight reduction rate is over 1 % by weight, the coating film is apt to have hardly any effect of shielding for plasma.

### Note

**Samples: A sheet having a thickness of 2 mm and size of 10 mm × 35 mm**

| Irradiation conditions: | | |
|---|---|---|
| O₂ plasma and CF₄ plasma | Gas flow rate | 16 SCCM |
| | Pressure | 20 mTorr |
| | Output power | 800 W |
| | Irradiation time | 30 minutes |
| NF₃ plasma | NF₃/Ar | 1 SLM/ 1 SLM |
| | Pressure | 3 Torr |
| | Irradiation time | 2 hours |
| | Temperature | 150°C |

The sealing material of the present invention that has non-tacking property, chemical resistance and plasma resistance while keeping strength, hardness, and sealing property that the soft base material has can be suitably used for equipment for manufacturing a liquid crystal or a semiconductor.

The sealing material of the present invention can also be suitably used in the following fields.

In the related fields of semiconductor such as an equipment for manufacturing a semiconductor, an equipment for manufacturing liquid crystal panel, an equipment for manufacturing plasma panel, plasma address liquid crystal panels, field emission display panels and solar cell boards, examples are O(square)-rings, packing, sealing materials, tubes, rolls, coating, lining, gaskets, diaphragms, hoses. These can be used in CVD equipment, dry etching machine, wet etching machine, equipment for oxidation and diffusion, sputtering equipment, ashing equipment, cleaning machine, ion implantation equipment, exhausting equipment, chemical liquid piping and gas piping. In specific terms, they can be used as O-rings and sealing materials for gate valves, as O-rings and sealing materials for quartz windows, as O-rings and sealing materials for chambers, as O-rings and sealing materials for gates, as O-rings and sealing materials for bell jars, as O-ring and sealing materials for couplings, as O-rings, sealing materials and diaphragms for pumps, as O-ring and sealing materials for gas controllers for semiconductors, as O-rings and sealing materials for resist developing and releasing solutions, as hoses and tubes for wafer cleaning solution, as rolls for transferring wafer, as lining and coating of tanks for resist developing solution and releasing solution, as lining and coating of tanks for wafer cleaning solution, and as lining and coating of tanks for wet etching. Further, they are used as sealants and sealing agents, as covering materials of quartz in optical fibers, as potting, coating, and adhesive seals for electronic components and circuit board that have the purposes of electrical insulation, vibration isolating, water-proofing, and moisture-proofing, as gaskets for magnetic storages, as modifying agents of sealants such as epoxy, as sealants for clean rooms and clean equipment, and the like.

In the Vehicle field, gaskets, shaft seals, valve stem seals, sealing materials and hoses can be used in engines and their auxiliary equipment, hoses and sealing materials can be used in AT equipment, O(square)-rings, tubes, packing, valve core materials, hoses, sealing materials, and diaphragms can be used in fuel line and auxiliary equipment. In specific terms, the sealing materials of the present invention can be used as engine head gaskets, metal gaskets, oil pan gaskets, crank shaft seals, cam shaft seals, valve stem seals, manifold packing, oil hoses, seals for oxygen sensors, ATF hoses, injector O-rings, injector packing, fuel pump O-rings, diaphragms, fuel hoses, crankshaft seals, gearbox seals, power piston packing, seals of cylinder liners, seals in valve stems, seals in front pumps in automatic transmissions, rear axle pinion seals, gaskets of universal joints, pinion seals in speedometers, piston cups of footbrakes, O-rings of torque transmissions, oil seals, seals in exhaust gas afterburners, bearing seals, EGR tubes, twin curb tubes, diaphragms for sensors in carburetors, rubber vibration isolator (such as an engine mounts, an exhaust part), hoses for afterburners, oxygen sensor bushes, and the like.

In the aircraft field, the rocket field and the ship field, examples are diaphragms, O(square)-rings, valves, tubes, packing, hoses, sealing materials and can be used in fuel system. In specific terms, in the aircraft field, the sealing materials of the present invention are used in jet engine valve stem seals, hoses, gaskets and O-rings for fuel supply, rotating shaft seals, gaskets of hydraulic equipment, fire wall seals and the like, and in the marine vessel field, they are used in seals in the sterns of propeller shafts of screws, valve stem seals for intake air and exhaust air in diesel engines, valve seals of butterfly valves, shaft seals of butterfly valves and the like.

In the field of chemical products such as plants, examples are lining, valves, packing, rolls, hoses, diaphragms, O(square)-rings, tubes, sealing materials, chemical resistant coating, and they can be used in the production line of chemical products such as pharmaceuticals, agricultural chemicals, coating, and resins. Specifically, they can be used as pump for chemical products, seals for flowmeters and piping, seals for heat exchanger, packing for glass cooling device for manufacturing sulfuric acid, seals of device for scattering agricultural chemicals and agricultural chemicals transferring pump, seals for gas piping, seals for metal plating liquid, packing for high temperature vacuum drying oven, roller seals for belts in paper manufacturing, seals for fuel cells, joint seals for air channels, rolls for trichlene resistance (for dyeing fibers), acid-resistant hoses (for concentrated sulfuric acid), packing for bonding parts of tubes in gas chromatography and pH meters, hoses for transferring chloric gas, drain hoses of rain water in benzene and toluene storage tank, as seals, tubes, diaphragms and parts of valves for analytical instruments and equipment of physics and chemistry, and the like.

In the field of medicals such as pharmaceuticals, the sealing materials can be used as plugs for medicine containers and the like.

In the photograph field such as developing machine, the printing field such as printing machines and the coating field such as coating facilities are rolls, and they can be used for film processors and X-ray film developing machines, printing rolls, and coating rolls, respectively. In specific terms, they can be used as developing rolls in film processors and X-ray film processors, as gravure rolls and guide rolls of printing rolls, as gravure rolls of painting rolls in magnetic tape production and coating lines, as guide rolls in magnetic tape production and coating lines, various coating rolls, and the like. Further, the sealing materials can be used as seals for dry copying machines, as printing rolls, scrapers, tubes and valve parts in printing equipment, as coating rolls, scrapers, tubes and valve parts in coating and painting equipment, as ink tubes, rolls and belts in printers, as belts and rolls in dry copying machines, as rolls and belts in printing machines, and the like.

And tubes can be used in the filed of analyzer and physical and chemical appliances.

Examples of the field of food plant equipment are lining, valves, packing, rolls, hoses, diaphragms, O(square)-rings, tubes, sealing materials, belts, which can be used in the food processing line. Specifically, they can be used as seals for plate type heat exchanger, as seals for electromagnetic valves in automatic dispensers, and the like.

Examples of the field of equipment in atomic power plants are packing, O-rings, hoses, sealing materials, diaphragms, valves, rolls, tubes and the like.

Examples of the field of steel making such as steel sheet processing facilities are rolls and the like, which can be used in steel sheet processing rolls and the like.

Examples of the field of general industry are packing, O-rings, hoses, sealing materials, diaphragms, valves, rolls, tubes, lining, mandrels, electric wire, flexible joints, belts, rubber plates, weather strips, rolls of PPC copying machine, roller blades, and belts, which are specifically used as seals of hydraulic equipment and lubrication machines, bearing seals, seals for windows and the other in dry cleaning, seals for apparatus of concentrating uranium hexafluoride, seal (vacuum) valves in cyclotrons, seals for automatic packing machine, diaphragms in pumps for analysis of sulfurous acid gas and chlorine gas in the air (environmental destruction measuring instruments), rolls and belts in printing machines, squeeze rolls for acid pickling, and the like.

Examples of the field of electricity, the sealing materials are specifically used such as insulation oil cups for super-express railway, benching seals in liquid-ring transformers, jackets in cables for oil wells, and the like.

In the field of fuel cells, the sealing materials are specifically used such as sealing materials between electrodes and separators, seals for piping for hydrogen, oxygen and generated water, and the like.

In the field of electronic parts, the sealing materials are specifically used in raw materials of ingredient for heating, raw materials of electromagnetic wave shielding materials, modifying materials for prepreg resins in printed wiring boards such as epoxy, shatter-resistant materials for such as electric lamps, gaskets for hard disk drives of computers.

Examples of the field of molded products that can be formed on-site are not especially limited. The sealing materials are specifically used such as coating agents of metallic gaskets for automobile engines, gaskets of oil pans in engines, rolls for copying machines and printers, sealing agents for the construction, gaskets for apparatus of magnetic recording, sealing agents of filter units for clean rooms, coating agents for printed boards, fixing agents for parts of electricity and electron, treatment for insulating and moisture-proof of the lead wire terminals in electrical equipment, seals for ovens such as electric furnaces, terminal treatment of sheath heaters, seals for window frames in microwave ovens, adhesion of CRT wedges and necks, adhesion of electrical parts in automobiles, joint seals for kitchens, bathrooms and lavatories.

The present invention will be explained with the use of examples, but the present invention should not be limited to the examples.

### Evaluation methods

### <Cracking property>

A substrate on which a film is formed is folded at the degree of 180 to observe the surface whether any crack or peeling is generated visually and be evaluated by the following criteria.
○: No crack and no peeling is generated.
×: Cracks and peeling are clearly observed.

### <Surface roughness (Ra)>

The measurement is conducted with a surface roughness gauge (model name: Surface profile measuring microscope VF-7500, made by Keyence Corporation).

### <Adhesion property-1 >

The adhesion property is measured in conformity to the cross-cut tape adhesion test (1 mm square/100 pieces) of JIS K5600 with a sheet having thickness of 2 mm and size of 15 mm × 15 mm.

### <Adhesion property-2>

The coated surface of a sheet having size of 10 mm × 20 mm and of 2 mm in thickness is rubbed 20 times with Bencot M5 (made by Asahi Kasei Corporation) to evaluate the peeling state of the surface based on the following criteria.
○: No peeling was observed after rubbing 20 times.
Δ: Peeling was observed only by rubbing 10 to 20 times.
×: Peeling was observed by rubbing less than 10 times.

### <Adhesion property-3>

The adhesion property is measured under the following conditions with an obtained sealing material. The test is conducted with the same method as that was prescribed in JIS R-3255 (A process for testing the adherence of a thin film on a glass substrate) except for replacing the glass substrate with a soft base material.

**Test device: Ultra-fine film scratch tester MODEL CSR-02 (made by Rhesca Co., Ltd.)**

| Test conditions: | |
|---|---|
| Curvature radius of diamond stylus | 5.0 µm |
| Elastic arm | 146.64 g/mm |
| Stage angle | 3.0° |
| Measurement speed | 10.0 µm/s |
| Load applying speed | 75.31 mN/mm |
| Excitation width | 79 µm |
| Exciting frequency | 30 Hz |

### <Plasma resistance property>

The plasma resistance property is measured under the following conditions with a sheet having a thickness of 2 mm and a size of 10 mm × 35 mm. However, the coated surface of a sheet is imbedded into a protecting frame, which is made out by hollowing the center part of a sheet made of a tetrafluoroethylene resin (thickness of 2 mm and size of 45 mm × 20 mm) without influencing the side face of the sheet which does not be coated with the coating film by plasma irradiation to conduct plasma irradiation.

### (O₂ plasma and CF₄ plasma)

**Plasma irradiation device: ICP high density plasma machine (MODEL RIE-101iPH, made by Samco International Co., Ltd.)**

| | | |
|---|---|---|
| Irradiation conditions: | Gas flow rate | 16 SCCM |
| | Pressure 20 | mTorr |
| | Output power | 800 W |
| | Irradiation time | 30 minutes |
| (NF₃ plasma) Plasma irradiation device: Astron fluorine atom generator AX7657-2 (made by ASTEX Corp.) | | |
| Irradiation conditions: | NF₃/Ar | 1 SLM/1 SLM |
| | Pressure | 3 Torr |
| | Irradiation time | 2 hours |
| | Temperature | 150°C |

Irradiation operation: In order to stabilize the atmosphere within the chamber of the plasma irradiation device, as the pretreatment of the chamber, electric discharge is conducted for 5 minutes in the state of not containing a sample. A container made of an aluminum containing a test sample is placed in the center portion of RF electrodes to conduct plasma irradiation under the conditions described above.
Weight measurement: Measurement was conducted to 0.01 mg using an electronic analysis scale 2006 MPE made by Sertorious GMBH and the 0.01 mg column was rounded off.
Measurement of surface roughness: The measurement is conducted with a surface roughness tester (model name: Surface configuration measuring microscope VF-7500, made by Keyence Corporation).

### (Shore A hardness)

Measurement is conducted in conformity to ASTM D2240, specifically with an analog hardness meter A type made by KOUBUNSHI KEIKI Co., Ltd..

### (Shore D hardness)

Measurement is conducted in conformity to ASTM D2240, specifically with an analog hardness meter D type made by KOUBUNSHI KEIKI Co., Ltd..

### REFERENCE EXAMPLE 1

### (Preparation of fluorine rubber sheet (A))

Fluorine-containing elastomer (DAI-EL perfluoro rubber GA-105, available from Daikin Industries, Ltd.), Perhexa 25B (available from by NOF Corporation), triallyl isocyanurate (TAIC) (available from Nippon Kasei Chemical Co., Ltd.), and aluminum oxide were kneaded at the weight ratio of 100/1/2/15 with an open roll to obtain a crosslinkable fluorine elastomer composition.

After the obtained fluorine elastomer composition was pressed at 160°C for 7 minutes to be cross-linked, the composition was further oven cross-linked within an air oven kept at 180°C for 4 hours to obtain fluorine rubber sheet (A) having a thickness of 2 mm and a size of 100 mm × 75 mm. The surface roughness (Ra) of the fluorine rubber sheet (A) was 0.18 µm.

### REFERENCE EXAMPLE 2

### (Preparation of fluorine rubber sheet (B))

Fluorine-containing elastomer (DAI-EL perfluoro rubber GA-105, available from Daikin Industries, Ltd.), Perhexa 25B (available from NOF Corporation), triallyl isocyanurate (TAIC) (available from Nippon Kasei Chemical Co., Ltd.), and polyimide resin powder UIP-S (available from Ube Industries, Ltd.) were kneaded in the weight ratio of 100/1/2/15 with an open roll to give a crosslinkable fluorine elastomer composition.

After the obtained fluorine elastomer composition was pressed at 160°C for 7 minutes to be cross-linked, the composition was further cross-linked within an air oven kept at 180°C for 4 hours to obtain fluorine rubber sheet (B) having a thickness of 2 mm and a size of 100 mm × 75 mm. The surface roughness (Ra) of the fluorine rubber sheet (B) was 0.21 µm.

### EXAMPLE 1

The fluorine rubber sheet (A) obtained in Reference Example 1 was cleaned according to the procedures in the order of alkali ultrasonic cleaning (at 45°C) for 1.5 minutes, general running water ultrasonic cleaning for 1.5 minutes, general running water bubbling cleaning for 1.5 minutes, purified water ultrasonic cleaning for 3 minutes, purified water bubbling cleaning for 1.5 minutes, and warm purified water cleaning for several minutes. The fluorine rubber sheet after cleaning was considered as a base material, on which surface a coating film of aluminum having a thickness of 0.2 µm was formed with ion plating equipment (film forming conditions: evaporation material Al, discharge current 50 A, Ar flow rate 40 SCCM, and film forming pressure 0.25 mTorr).

With the use of the obtained fluorine rubber sheet having the coating film, the tests of adhesion property, cracking property, and plasma resistance property were conducted with the sheet cut in the prescribed size. The results are shown in Table 1.

### EXAMPLE 2

A coating film of aluminum having a thickness of 0.2 µm was formed in the same method as that in Example 1, except for using the fluorine rubber sheet (B) obtained in Reference Example 2 as the base material.

The tests of adhesion property, cracking property and plasma resistance property were conducted with the use of the obtained fluorine rubber sheet having the coating film, with the sheet cut in the prescribed size. The results are shown in Table 1.

### EXAMPLE 3

The fluorine rubber sheet (A) obtained in Reference Example 1 was washed under the same conditions as those in Example 1. A coating film of aluminum having a thickness of 0.2 µm was formed on the surface of the base material after washing with the ion plating equipment (film forming conditions: evaporation material Al, discharge current 40 A, Ar flow rate 40 SCCM, O₂ flow rate 100 SCCM, and film forming pressure 0.59 mTorr).

The tests of adhesion property, cracking property and plasma resistance property were conducted with the use of the obtained fluorine rubber sheet having the coating film with the sheet cut in the prescribed size. The results are shown in Table 1.

### EXAMPLE 4

A coating film of aluminum having a thickness of 0.2 µm was formed in the same method as that in Example 3, except for using the fluorine rubber sheet (B) obtained in Reference Example 2 as the base material.

The tests of adhesion property, cracking property and plasma resistance property were conducted with the use of the obtained fluorine rubber sheet having the coating film with the sheet cut in the prescribed size. The results are shown in Table 1.

### EXAMPLE 5

The fluorine rubber sheet (A) obtained in Reference Example 1 was washed under the same conditions as those in Example 1. The surface of the base material after washing was treated with plasma ashing about 5 minutes at the gas conditions of Ar/O₂ = 40 SCCM/100 SCCM and discharge current (about 30 A) accompanying no evaporation of A1 material within the ion plating equipment. After that, a coating film of aluminum having a thickness of 0.2 µm was formed on the surface of the base material by the ion plating process (film forming conditions: evaporation material Al, discharge current 40 A, Ar flow rate 40 SCCM, film forming pressure 0.26 mTorr, and with no heating).

The tests of adhesion property, cracking property, and plasma resistance property were conducted with the use of the obtained fluorine rubber sheet having the coating film with the sheet cut in the prescribed size. The results are shown in Table 1.

### EXAMPLE 6

A coating film of aluminum having a thickness of 0.2 µm was formed in the same method as that in Example 5, except for using the fluorine rubber sheet (B) obtained in Reference Example 2 as the base material.

The tests of adhesion property, cracking property, and plasma resistance property were conducted with the use of the obtained fluorine rubber sheet having the coating film with the sheet cut in the prescribed size. The results are shown in Table 1.

### EXAMPLE 7

The fluorine rubber sheet (A) obtained in Reference Example 1 was cleaned according to the procedures in the order of alkali ultrasonic cleaning (at 45°C) for 1.5 minutes, general running water ultrasonic cleaning for 1.5 minutes, general running water bubbling cleaning for 1.5 minutes, purified water ultrasonic cleaning for 3 minutes, purified water bubbling cleaning for 1.5 minutes, and warm purified water cleaning for several minutes. The fluorine rubber sheet after cleaning was considered as a base material, on which surface a coating film of aluminum having a thickness of 0.2 µm was formed with sputtering equipment.

The tests of adhesion property, cracking property, and plasma resistance property were conducted with the use of the obtained fluorine rubber sheet having the coating film with the sheet cut in the prescribed size. The results are shown in Table 1.

### COMPARATIVE EXAMPLE 1

The test of plasma resistance was conducted with a fluorine rubber sheet (A) obtained in Reference Example 1. The result was shown in Table 1.

### COMPARATIVE EXAMPLE 2

The test of plasma resistance was conducted with a fluorine rubber sheet (B) obtained in Reference Example 2. The result was shown in Table 1.

**TABLE 1**

| | Examples | | | | | | | Com. Ex. | |
|---|---|---|---|---|---|---|---|---|---|
| | 1 | 2 | 3 | 4 | 5 | 6 | 7 | 1 | 2 |
| Shore A hardness | 77 | 76 | 77 | 76 | 77 | 76 | 77 | 77 | 76 |
| Adhesion property-1 (pieces/100 pieces) | 2 | 6 | 4 | 7 | 0 | 0 | 90 | - | - |
| Adhesion property-2 | Δ | Δ | Δ | Δ | ○ | ○ | × | - | - |
| Adhesion property-3 (mN) | 48 | 43 | 56 | 68 | 55 | 61 | 22 | - | - |
| Crack property | ○ | ○ | ○ | ○ | ○ | ○ | × | - | - |

| Oxygen plasma resistance | | | | | | | | | |
|---|---|---|---|---|---|---|---|---|---|
| Rate of decrease in weight (weight %) | <0.01 | <0.01 | <0.01 | <0.01 | <0.01 | <0.01 | <0.01 | 0.93 | 2.29 |
| The degree of surface roughness (Ra) | 0.15 | 0.14 | 0.18 | 0.18 | 0.18 | 0.18 | 0.15 | 0.45 | 0.59 |
| Change in Ra value | -0.03 | -0.07 | 0.00 | -0.03 | 0.00 | -0.03 | -0.03 | 0.27 | 0.38 |

| CF₄ plasma resistance | | | | | | | | | |
|---|---|---|---|---|---|---|---|---|---|
| Rate of decrease in weight (weight %) | <0.01 | <0.01 | <0.01 | <0.01 | <0.01 | <0.01 | <0.01 | 1.05 | 2.61 |
| The degree of surface roughness (Ra) | 0.13 | 0.14 | 0.17 | 0.18 | 0.18 | 0.20 | 0.14 | 0.41 | 0.57 |
| Change in Ra value | -0.05 | -0.07 | -0.01 | -0.03 | 0.00 | -0.01 | -0.05 | 0.23 | 0.36 |

| NF₃ plasma resistance | | | | | | | | | |
|---|---|---|---|---|---|---|---|---|---|
| Rate of decrease in weight (weight %) | <0.01 | <0.01 | <0.01 | <0.01 | <0.01 | <0.01 | <0.01 | 1.53 | 0.07 |
| The degree of surface roughness (Ra) | 0.15 | 0.15 | 0.18 | 0.17 | 0.18 | 0.19 | 0.15 | 0.62 | 0.22 |
| Change in Ra value | -0.03 | -0.05 | 0.00 | -0.04 | 0.00 | -0.02 | -0.03 | 0.44 | 0.01 |

### INDUSTRIAL APPLICABILITY

Because the sealing material of the present invention has a very thin coated layer on the surface, therefore it can provide a sealing material that chemical resistance, plasma resistance, and non-tacking property are enhanced while keeping strength, hardness, and sealing property that a soft base material has.

## Claims

1. A sealing material comprising a coating film comprising at least one kind of a metal or a metallic compound selected from the group consisting of metals, metal oxides, metal nitrides, metal carbides and complex thereof on the whole or a part of the surface of a substrate comprising a soft material having the shore D hardness of at most 75 and the shore A hardness of 40 to 100.

2. The sealing material of Claim 1, wherein the soft material is an elastomer.

3. The sealing material of Claim 1, wherein the soft material is a fluorine polymer material.

4. The sealing material of Claim 1, 2 or 3, wherein the soft material is a fluorine rubber.

5. The sealing material of Claim 1, 2, 3 or 4, wherein the thickness of the coating film is 0.005 to 1 µm.

6. The sealing material of Claim 1, 2, 3, 4 or 5, wherein the soft material and the coating film are closely adhered with each other at the degree of adhesivity where the number of peeling between the soft material and the coating film is at most 50/100, which is measured by the cross-cut tape adhesion test (1 mm square/100 pieces) according to JIS K5600.

7. The sealing material of Claim 1, 2, 3, 4 or 5, wherein the soft material and the coating film are closely adhered with each other at the degree of adhesivity where the critical breaking load is at least 25 mN, which is measured with the microscratch test at the following conditions:
Note:
| Test conditions: | |
|---|---|
| Curvature radius of diamond stylus | 5.0 µm |
| Elastic arm | 146.64 g/mm |
| Stage angle | 3.0° |
| Measurement speed | 10.0 µm/s |
| Load applying speed | 75.31 mN/mm |
| Excitation width | 79 µm |
| Excitation frequency | 30 Hz |

8. The sealing material of Claim 1, 2, 3, 4, 5, 6 or 7, wherein all the rates of decrease in weight are at most 1 % by weight at irradiating respective plasmas of O₂, CF₄, and NF₃ under the following conditions:
Note:
**Samples: A sheet having a thickness of 2 mm and a size of 10 mm × 35 mm**
| Irradiation conditions: | | |
|---|---|---|
| O₂ plasma and CF₄ plasma | Gas flow rate | 16 SCCM |
| | Pressure | 20 mTorr |
| | Output power | 800 W |
| | Irradiation time | 30 minutes |
| NF₃ plasma | NF₃/Ar | 1 SLM/1 SLM |
| | Pressure | 3 Torr |
| | Irradiation time | 2 hours |
| | Temperature | 150°C |

9. The sealing material of Claim 1, 2, 3, 4, 5, 6, 7 or 8, wherein the coating film is formed by a vacuum film forming process.

10. The sealing material of Claim 9, wherein the vacuum film forming process is an ion plating process.

11. The sealing material of Claim 1, 2, 3, 4, 5, 6, 7, 8, 9 or 10, which is used for equipment for manufacturing a liquid crystal or a semiconductor.

12. A liquid crystal or semiconductor manufacturing equipment which has the sealing material of Claim 1, 2, 3, 4, 5, 6, 7, 8, 9, 10 or 11.

13. A process for preparing a sealing material comprising a step of coating the whole or a part of the surface of a substrate comprising of a soft material having the shore D hardness of at most 75 and the shore A hardness of 40 to 100 with at least one kind of a metal or a metallic compound selected from the group consisting of metals, metal oxides, metal nitrides, metal carbides and complexes thereof by ion plating process.
